# EUROPÄISCHE PATENTSCHRIFT

(11) **EP 1 887 251 B1**
(45) Veröffentlichungstag und Bekanntmachung des Hinweises auf die Patenterteilung: **07.10.2009**
(21) Anmeldenummer: 06016752.5
(22) Anmeldetag: 10.08.2006
(51) Int. Cl.: F16F 13/26

(54) **Hydrolager**
Hydraulic support
Support hydraulique

(43) Veröffentlichungstag der Anmeldung: 13.02.2008
(73) Patentinhaber: Carl Freudenberg KG, 69469 Weinheim (DE)
(72) Erfinder: Wittmershaus , Volker, 69488 Birkenau (DE)

(56) Entgegenhaltungen:
- EP-A- 0 395 795
- DE-A1- 3 523 912
- DE-A1- 3 933 252
- JP-A- 11 166 581

## Beschreibung

### Technisches Gebiet

Die Erfindung betrifft ein Hydrolager, umfassend ein Auflager und ein Traglager die durch einen Federkörper miteinander verbunden sind und die einen mit Dämpfungsflüssigkeit befüllten ersten Raum begrenzen der über ein durch eine Verstelleinrichtung verstellbares Ventil mit einem zweiten Raum verbunden ist, wobei das Auflager einen Sockel mit Befestigungsmitteln zur Befestigung des Hydrolagers aufweist (siehe DE-A-3523912, dem Oberbegriff entsprechend).

### Stand der Technik

Derartige Hydrolager sind aus der DE 39 33 252 C2 bekannt. Das vorbekannte Hydrolager weist ein verstellbares Ventil auf, um ein variables Spaltmaß zwischen den beiden Räumen zu ermöglichen. Dadurch ist es möglich ein hydraulisch gedämpftes Lager mit einer Dämpfung zu erhalten welches frequenzabhängig regelbar ist. Dies ist insbesondere bei Verbrennungsmotoren vorteilhaft, die abhängig von der Anzahl der Zylinder und des Arbeitstaktes in bestimmten Frequenzabständen Vibrationsmaxima aufweisen. Diese Vibrationen können durch regelbare Hydrolager besonders effektiv gedämpft werden. Die Montage des vorbekannten Hydrolagers erfolgt mittels Befestigungsmitteln die an den beiden Stirnseiten angeordnet sind. Das erfordert, je nach Ausführung der Verstelleinrichtung, einen großen Einbauraum. Dabei müssen insbesondere die Anbindungspunkte an Karosserie und Motor entsprechend weit voneinander entfernt angeordnet sein. Das ist aber problematisch, da in Kraftfahrzeugen der zur Verfügung stehende Bauraum begrenzt ist.

### Darstellung der Erfindung

Der Erfindung liegt die Aufgabe zugrunde, ein Hydrolager der eingangs genannten Art bereitzustellen, bei dem die Verstelleinrichtung unabhängig von dem Abstand der Befestigungspunkte des Hydrolagers ist.

Diese Aufgabe wird mit den Merkmalen von Anspruch 1 gelöst. Auf vorteilhafte Ausgestaltungen nehmen die Unteransprüche Bezug.

Zur Lösung der Aufgabe ist die Verstelleinrichtung auf der dem Sockel abgewandten Seite des Traglagers angeordnet. Das Hydrolager wird über die Befestigungsmittel des Sockels an einer Anbindungsstelle in einem Kraftfahrzeug befestigt. Da der Bauraum im Bereich der Anbindungsstelle und insbesondere auch darunter begrenzt ist, weist das Hydrolager erfindungsgemäß eine Einrichtung auf, die es erlaubt, das Ventil einschließlich der Verstelleinrichtung auf der dem Sockel abgewandten Seite des Hydrolagers anzuordnen. Dabei ist vorteilhaft, dass in dem Bereich oberhalb des Hydrolagers meist mehr Bauraum zur Verfügung steht. Bei Verlagerung der mit Dämpfungsflüssigkeit befüllten Räume sowie des Ventils mit Verstelleinrichtung werden bauraumintensive Elemente des Hydrolagers in Bereiche verlagert, an denen mehr Bauraum zur Verfügung steht.
Der zweite Raum ist durch das Ventil und eine Membran begrenzt. Die Membran ist dabei drucklos Volumen aufnehmend ausgebildet und ermöglicht eine drucklose Verlagerung der Dämpfungsflüssigkeit zwischen den Räumen durch den Ventilspalt.

Das Traglager weist vom Sockel abragende Stützen auf, an denen auf der dem Sockel abgewandten Seite das Ventil mit Verstelleinrichtung befestigbar ist. Die Stützen sind vorteilhafterweise materialeinheitlich und einstückig mit dem Sockel ausgebildet und bestehen wie der Sockel aus einem metallischen Werkstoff. Die Stützen ermöglichen eine Befestigung des Ventils und der Verstelleinrichtung an dem Traglager, so dass Ventil und Verstelleinrichtung unabhängig von dem Sockel in dem Hydrolager positioniert ist.

Die Stützen können den Federkörper teilweise umschließen. Die Stützen bilden die radialen Anschlagflächen für die Federkörper, die die Auslenkung des Federkörpers jeweils begrenzen. Da die Hydraulikeinheit über dem Lager angeordnet ist, kann der Radialanschlag tiefer angeordnet werden. Das ermöglicht eine filigranere Auslegung der Stützen und es kann ein schwächerer Werkstoff für die Stützen gewählt werden, beispielsweise ein Kunststoff.

Die Membran kann zumindest teilweise durch einen an dem Auflager befestigten Deckel umschlossen sein. Der Deckel schützt die Membran vor Beschädigungen und ist vorteilhafterweise aus einem metallischen Werkstoff hergestellt.

Die Verstelleinrichtung kann an dem Deckel befestigt sein. Dadurch ist die Verstelleinrichtung einfach zu montieren und bleibt auch nach der Montage leicht erreichbar, so dass die Verstelleinrichtung einfach an die Motorelektronik anschließbar und auch austauschbar ist.

Das Ventil kann als Kegelventil mit einem variablen Durchlassquerschnitt ausgebildet sein. Bei dieser Ausgestaltung ergibt sich je nach Position des Ventils ein kegelstumpfförmiger Ringspalt mit einer bestimmten Breite, der zu einer günstigen Strömungsführung und einer wirksamen Dämpfung führt.

In dem ersten Raum kann zwischen Federkörper und Ventil ein Dämpfungssystem angeordnet sein. Das Dämpfungssystem kann einen Dämpfungskanal, möglicherweise mit einem variablen Querschnitt und ein Düsensystem umfassen. Derartige Einrichtungen verbessern das Dämpfungsverhalten in besonders störenden Frequenzbereichen.

Die Verstelleinrichtung kann einen Elektromotor umfassen. Dabei kann der Elektromotor vorteilhafterweise als Schrittmotor ausgebildet sein. Diese ermöglichen aufgrund genau ansteuerbarer Drehwinkel eine exakte Einstellung der Ventilstellung und damit des Durchlassquerschnitts.

Das Ventil kann einen kreisförmigen Querschnitt aufweisen. Derartige Ventile sind besonders strömungsgünstig. Des Weiteren weist ein solches Hydrolager eine größere Menge Dämpfungsflüssigkeit auf, woraus sich gute Dämpfungseigenschaften ergeben.

Das Ventil kann einen rechteckigen Querschnitt aufweisen. Derartig ausgeführte Hydrolager sind Platz sparend.

### Kurzbeschreibung der Zeichnung

Einige Ausführungsbeispiele des erfindungsgemäßen Hydrolagers werden nachfolgend anhand der Figuren näher beschrieben. Diese zeigen, jeweils schematisch:
Fig. 1 das erfindungsgemäße Hydrolager im Schnitt;
Fig. 2 ein Hydrolager mit einer kreisförmiger Ventilgeometrie;
Fig. 3 ein Hydrolager mit einer rechteckförmigen Geometrie.

### Ausführung der Erfindung

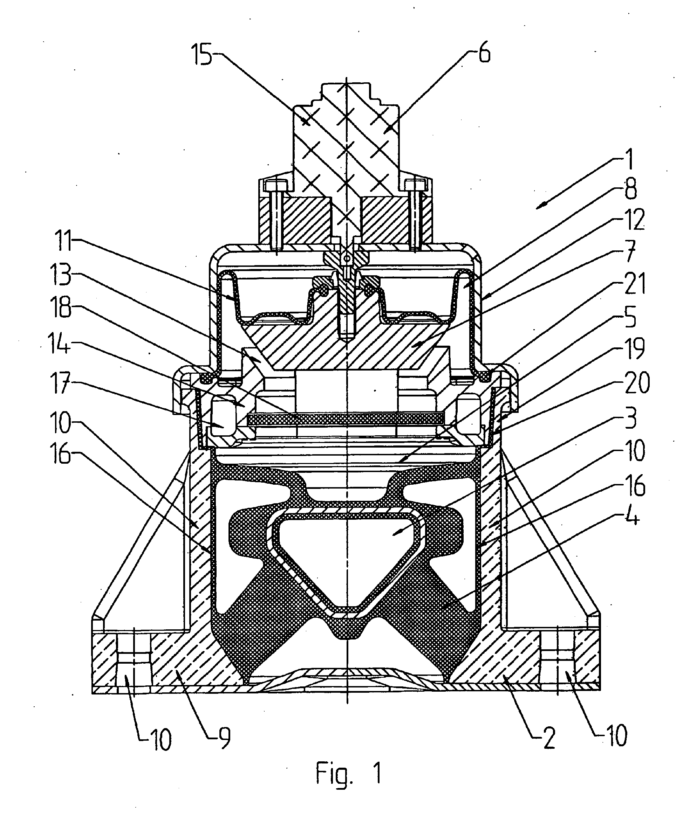

Figur 1 zeigt ein Hydrolager 1 zur Lagerung eines Kraftfahrzeugmotors in einem Kraftfahrzeug. Das Hydrolager 1 umfasst ein Auflager 2 zur Befestigung des Hydrolagers 1 in einer Kraftfahrzeug-Karosserie und ein Traglager 3 zur Lagerung eines Kraftfahrzeugmotors. Zur Befestigung des Hydrolagers 1 in der Kraftfahrzeug-Karosserie weist das Auflager 2 einen Sockel 9 auf in dem Befestigungsmittel 10, in dieser Ausführung Bohrungen, vorgesehen sind. Auflager 2 und Traglager 3 sind durch einen Federkörper 4 aus einem elastomeren Werkstoff miteinander verbunden, indem der Federkörper 4 an Auflager 2 und Traglager 3 anvulkanisiert ist. Das Traglager 3 und der Federkörper 4 begrenzen einen mit Dämpfungsflüssigkeit befüllten ersten Raum 5. Der erste Raum 5 wird weiterhin durch ein Ventil 7 begrenzt, welches durch eine Verstelleinrichtung 6 verstellbar ist. Das Ventil 7 verbindet den ersten Raum 5 mit einem zweiten Raum 8, wobei der zweite Raum 8 wiederum durch das Ventil 7 und durch eine drucklos Volumen aufnehmende Membran 11 begrenzt ist. Das Auflager 2 weist vom Sockel 9 abragende Stützen 10 auf, die materialeinheitlich und einstückig mit dem Auflager 2 ausgebildet sind und aus einem metallischen Werkstoff, beispielsweise einem Aluminiumdruckguss bestehen. Auf der dem Sockel 9 abgewandten Seite der Stützen 10 ist ein Deckel 12 befestigt, der die Membran 11 abdeckt. An diesem Deckel 12 ist die Verstelleinrichtung 6 mittels Schraubverbindungen befestigt. Dadurch ist das Ventil 7 mit Verstelleinrichtung 6 mittelbar an den Stützen 10 befestigt und die Verstelleinrichtung 6 ist auf der dem Sockel 9 abgewandten Seite des Auflagers 2 angeordnet.
Die Stützen 10 umschließen den Federkörper 4 an zwei gegenüber liegenden Seiten und bilden Anschlagflächen 16. Zur Geräuschdämpfung sind die Stützen 10 auf der dem Federkörper 4 zugewandten Seite zusätzlich mit elastomerem Werkstoff ausgekleidet. Diese Auskleidung der Stützen 10 ist einstückig und materialeinheitlich mit dem Federkörper 4 ausgebildet. Das Ventil 7 ist als Kegelventil mit einem variablen Durchlassquerschnitt 13 ausgebildet, wobei der Durchlassquerschnitt 13 durch die Verstelleinrichtung 6 geregelt wird, die in dieser Ausführung als Schrittmotor ausgebildet ist. Dieser Durchlassquerschnitt 13 ist für die Tilgerwirkung des Hydrolagers 1 verantwortlich. Durch Veränderung des Durchlassquerschnitts 13 kann die Absenkung der dynamischen Federrate des Hydrolagers 1 in einem weiten Frequenzbereich stufenlos eingestellt werden. In dem ersten Raum 5 ist zwischen Federkörper 4 und Ventil 7 ein Dämpfungssystem 14 angeordnet. Dieses Dämpfungssystem 14 umfasst einen Dämpfungskanal 17 und ein Düsensystem 18. Das Dämpfungssystem 14 ist als integrales Bauteil ausgebildet, welches den Tilgerkanal 17, das Düsensystem 18 und die Gegenfläche des Ventils 7 in einem Bauteil beinhaltet. Zur Lagerung des Dämpfungssystems 14 weisen die Stützen 10 einen umlaufenden Bund 19 auf, in dem sich eine umlaufende Ausnehmung 20 befindet. In der Ausnehmung 20 ist das Dämpfungssystem 14 angeordnet und durch eine Auskleidung der Ausnehmung mit elastomerem Werkstoff abgedichtet. Diese Auskleidung ist einstückig und materialeinheitlich mit dem Federkörper 4 ausgebildet. Das Tilger-System 14 weist eine umlaufende Nut 21 auf in der die Membran 11 angeordnet ist und dadurch den zweiten Raum 8 abdichtet. Die Membran 11 ist durch den Deckel 12 fixiert, der wiederum an dem Bund 19 befestigt ist.

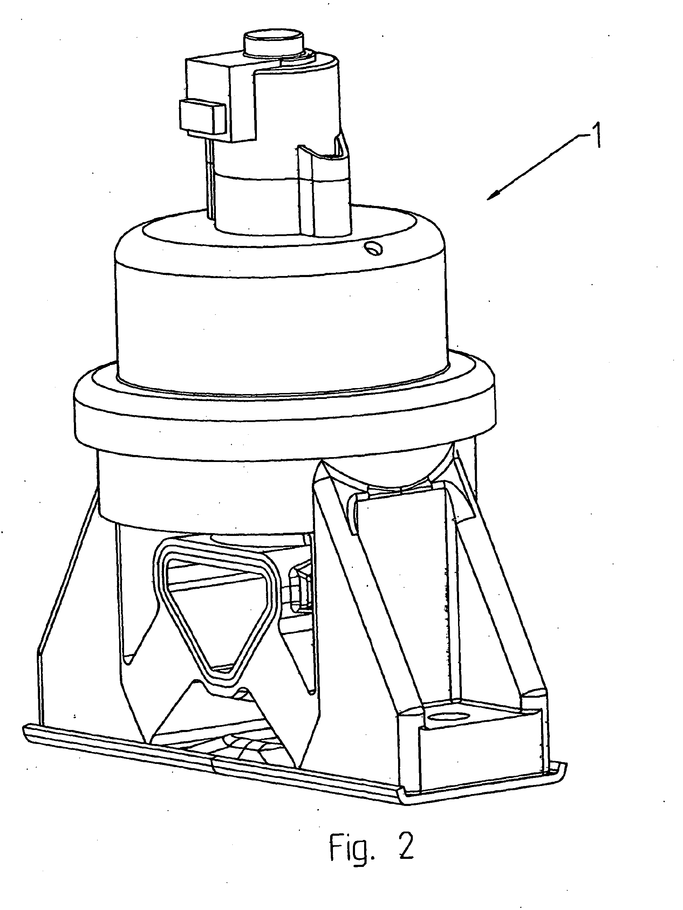

Figur 2 zeigt ein Hydrolager 1 gemäß Figur 1 mit einem Ventil 7 und einem Bund 19 mit einem im Wesentlichen kreisförmigen Querschnitt.

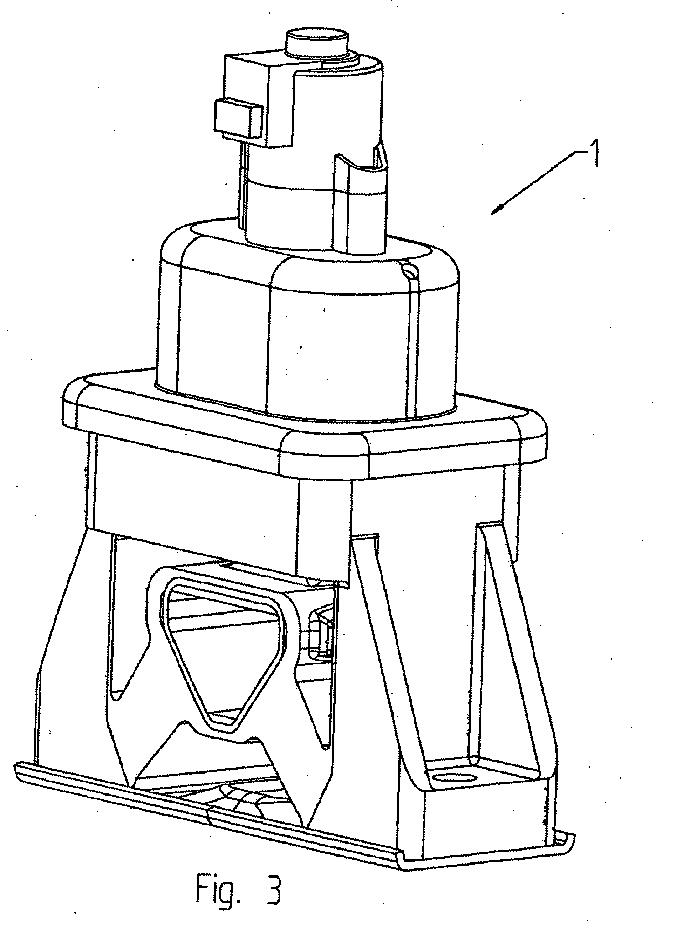

Figur 3 zeigt ein Hydrolager 1 gemäß Figur 1 mit einem Ventil 7 und einem Bund 19 mit einem im Wesentlichen rechteckigen Querschnitt.

## Patentansprüche

1. Hydrolager (1), umfassend ein Auflager (2) und ein Traglager (3), die durch einen Federkörper (4) miteinander verbunden sind und die einen mit Dämpfungsflüssigkeit befüllten ersten Raum (5) begrenzen, der über ein durch eine Verstelleinrichtung (6) verstellbares Ventil (7) mit einem zweiten Raum (8) verbunden ist, wobei das Auflager (2) einen Sockel (9) mit Befestigungsmitteln (10) zur Befestigung des Hydrolagers (1) aufweist und wobei die Verstelleinrichtung (6) auf der dem Sockel (9) abgewandten Seite des Auflagers (2) angeordnet ist **dadurch gekennzeichnet, dass** das Auflager (2) vom Sockel (9) abragende Stützen (10) aufweist, an denen auf der dem Sockel (9) abgewandten Seite das Ventil (7) mit Verstelleinrichtung (6) befestigbar ist, und wobei die Stützen (10) den Federkörper (4) teilweise umschließen und die Stützen (10) radiale Anschlagflächen (16) für den Federkörper (4) bilden, die die Auslenkung des Federkörper (4) jeweils begrenzen.

2. Hydrolager nach Anspruch 1, **dadurch gekennzeichnet, dass** der zweite Raum (8) durch das Ventil (7) und eine Membran (11) begrenzt ist, wobei die Membran (11) zumindest teilweise durch einen an dem Auflager (2) befestigten Deckel (12) umschlossen ist.

3. Hydrolager nach Anspruch 2, **dadurch gekennzeichnet, dass** die Verstelleinrichtung (6) an dem Deckel (12) befestigt ist.

4. Hydrolager nach einem der Ansprüche 1 bis 3, **dadurch gekennzeichnet, dass** das Ventil (7) als Kegelventil mit einem variablen Durchlassquerschnitt (13) ausgebildet ist.

5. Hydrolager nach einem der Ansprüche 1 bis 4, **dadurch gekennzeichnet, dass** in dem ersten Raum (5) zwischen Federkörper (4) und Ventil (7) ein Dämpfungssystem (14) angeordnet ist.

6. Hydrolager nach einem der Ansprüche 1 bis 5, **dadurch gekennzeichnet, dass** die Verstelleinrichtung (6) einen Elektromotor (15) umfasst.

7. Hydrolager nach einem der Ansprüche 1 bis 6, **dadurch gekennzeichnet, dass** das Ventil (7) einen kreisförmigen Querschnitt aufweist.

8. Hydrolager nach einem der Ansprüche 1 bis 7, **dadurch gekennzeichnet, dass** das Ventil (7) einen rechteckigen Querschnitt aufweist.

## Claims

1. Hydraulic mount (1), comprising a bearer (2) and a carrying bearing (3) which are connected to one another by means of a spring body (4) and which delimit a first space (5) which is filled with damping fluid and which is connected to a second space (8) via a valve (7) adjustable by means of an adjustment device (6), the bearer (2) having a pedestal (9) with fastening means (10) for fastening the hydraulic mount (1), the adjustment device (6) being arranged on that side of the bearer (2) which faces away from the pedestal (9), **characterized in that** the bearer (2) has supports (10) which project from the pedestal (9) and to which the valve (7) with adjustable device (6) can be fastened on the side facing away from the pedestal (9), and the supports (10) partially surrounding the spring body (4), and the supports (10) forming for the spring body (4) radial stop faces (16) which in each case delimit the deflection of the spring body (4).

2. Hydraulic mount according to Claim 1, **characterized in that** the second space (8) is delimited by the valve (7) and a diaphragm (11), the diaphragm (11) being at least partially surrounded by a cover (12) fastened to the bearer (2).

3. Hydraulic mount according to Claim 2, **characterized in that** the adjustment device (6) is fastened to the cover (12).

4. Hydraulic mount according to one of Claims 1 to 3, **characterized in that** the valve (7) is designed as a conical valve with a variable passage cross section (13).

5. Hydraulic mount according to one of Claims 1 to 4, **characterized in that** a damping system (14) is arranged in the first space (5) between the spring body (4) and valve (7).

6. Hydraulic mount according to one of Claims 1 to 5, **characterized in that** the adjustment device (6) comprises an electric motor (15).

7. Hydraulic mount according to one of Claims 1 to 6, **characterized in that** the valve (7) has a circular cross section.

8. Hydraulic mount according to one of Claims 1 to 7, **characterized in that** the valve (7) has a rectangular cross section.

## Revendications

1. Palier hydraulique (1), comprenant un appui (2) et un palier de support (3), qui sont connectés l'un à l'autre par un corps de ressort (4) et qui délimitent un premier espace (5) rempli de liquide d'amortissement, qui est connecté à un deuxième espace (8) par le biais d'une soupape (7) réglable par un dispositif de réglage (6), l'appui (2) présentant un socle (9) avec des moyens de fixation (10) pour la fixation du palier hydraulique (1), et le dispositif de réglage (6) étant disposé du côté de l'appui (2) opposé au socle (9), **caractérisé en ce que** l'appui (2) présente des supports (10) saillant hors du socle (9), sur lesquels la soupape (7) avec le dispositif de réglage (6) peut être fixée du côté opposé au socle (9), et dans lequel les supports (10) entourent partiellement le corps de ressort (4) et les supports (10) forment des surfaces de butée radiales (16) pour le corps de ressort (4) qui délimitent à chaque fois la déviation du corps de ressort (4).

2. Palier hydraulique selon la revendication 1, **caractérisé en ce que** le deuxième espace (8) est limité par la soupape (7) et une membrane (11), la membrane (11) étant entourée au moins en partie par un couvercle (12) fixé sur l'appui (2).

3. Palier hydraulique selon la revendication 2, **caractérisé en ce que** le dispositif de réglage (6) est fixé sur le couvercle (12).

4. Palier hydraulique selon l'une quelconque des revendications 1 à 3, **caractérisé en ce que** la soupape (7) est réalisée sous forme de soupape conique avec une section transversale de pansage variable (13).

5. Palier hydraulique selon l'une quelconque des revendications 1 à 4, **caractérisé en ce que** dans le premier espace (5) entre le corps de ressort (4) et la soupape (7) est disposé un système d'amortissement (14).

6. Palier hydraulique selon l'une quelconque des revendications 1 à 5, **caractérisé en ce que** le dispositif de réglage (6) comprend un moteur électrique (15).

7. Palier hydraulique selon l'une quelconque des revendications 1 à 6, **caractérisé en ce que** la soupape (7) présente une section transversale circulaire.

8. Palier hydraulique selon l'une quelconque des revendications 1 à 7, **caractérisé en ce que** la soupape (7) présente une section transversale rectangulaire.
